# EUROPEAN PATENT APPLICATION

(11) **EP 4 722 892 A1**
(43) Date of publication of application: **08.04.2026**
(21) Application number: 25206786.3
(22) Date of filing: 06.10.2025
(51) Int. Cl.: G06F 8/20, G06F 8/34, G06F 8/38, G06Q 10/10

(54) **UNIFIED END-TO-END AUTOMATION PLATFORM WITH APPLICATIONS, INTEGRATION, AND CODE BEHIND IN A COMMON INTERFACE**

(30) Priority: 04.10.2024 US 202418906689
(71) Applicant: UiPath, Inc., New York NY 10017 (US)
(72) Inventor: COHEN, Evan, New York, 10017 (US); CHAKRABARTY, Arghya, New York, 10017 (US); GRIGORE, Mircea, New York, 10017 (US); RUSANU, Remus, New York, 10017 (US); LEKSHMANAN, Viswanath, New York, 10017 (US)
(74) Representative: Ungria López, Javier

(57) **Abstract**

An end-to-end automation platform is disclosed that provides a common interface for building applications, data services, and integrations (e.g., processes, queues, entities, connections, etc.). Unified build/project provides a single seamless way of building potentially complex end-to-end automations in certain embodiments, which can be done significantly faster with minimum configuration. The user can build an application in a robotic process automation (RPA) development platform and create workflows in the same interface without leaving the project. The user can leverage the array of activities available in the RPA development platform for handling events in the application, such as button clicks, dropdown value changes, page loads, etc. The user may also build and publish the whole project as a single unit in a conductor application and seamlessly deploy applications along with the attached workflows with a single action.

## Description

### FIELD

The present invention relates to automation, and more particularly, to an end-to-end automation platform that provides a common interface for building applications, data services, and integrations with other platforms, as well as providing the ability to modify code behind user interface (UI) elements.

### BACKGROUND

Current automation development platforms do not enable users to create end-to-end automation across various products and services, such as applications, data services, and integrations with other platforms via a unified platform. Rather, users must work separately on applications and integration, and then make connections therebetween. In other words, users need to know that platform capabilities exist, where to find them, and how to use them inside an automation. This places a significant burden on developers. Furthermore, the code behind Ul elements does not speak the same language as the automation, and thus, cannot use the automation functionality within. Accordingly, an improved and/or alternative approach may be beneficial.

### SUMMARY

Certain embodiments of the present invention may provide solutions to the problems and needs in the art that have not yet been fully identified, appreciated, or solved by current software automation technologies, and/or provide a useful alternative thereto. For example, some embodiments of the present invention pertain to an end-to-end automation platform that provides a common interface for building applications, data services, and integrations with other platforms.

In an embodiment, one or more non-transitory computer-readable media store one or more computer programs. The one or more computer programs are configured to cause at least one processor to display an application interface for an application front end and a unified build explorer menu. The application interface includes a plurality of graphical elements and the unified build explorer interface includes one or more projects. The one or more computer programs are also configured to cause the at least one processor to, responsive to an event, display a trigger and workflow configuration interface. The trigger and workflow configuration interface facilitates selection of a trigger and a workflow for a graphical element of the plurality of graphical elements. The one or more computer programs are further configured to cause the at least one processor to generate a trigger and a workflow for the graphical element based on input from the user provided to the trigger and workflow configuration interface and generate the application front end and an automation comprising the generated trigger and workflow as part of a solution. Responsive to an event associated with the graphical element occurring in the application front end at runtime, the application front end is configured, via an event handler, to cause an attended or unattended robotic process automation (RPA) robot to execute the respective workflow for the graphical element at runtime.

In another embodiment, a computer-implemented method includes displaying, by a computing system, an application interface for an application front end and a unified build explorer menu. The application interface includes a plurality of graphical elements and the unified build explorer interface includes one or more projects. The computer-implemented method also includes, responsive to an event, displaying, by the computing system, a trigger and workflow configuration interface. The trigger and workflow configuration interface facilitates selection of a trigger and a workflow for a graphical element of the plurality of graphical elements. The computer implemented method further includes generating, by the computing system, a trigger and a workflow for the graphical element based on input from the user provided to the trigger and workflow configuration interface. Additionally, the computer-implemented method includes generating, by the computing system, the application front end and an automation including the generated trigger and workflow as part of a solution and triggering, by the computing system, an end-to-end business process based on the generated trigger and workflow. Responsive to an event associated with the graphical element occurring in the application front end at runtime, the application front end is configured, via an event handler, to cause an attended or unattended RPA robot to execute the respective workflow for the graphical element at runtime.

In yet another embodiment, one or more computing systems include memory storing computer program instructions and at least one processor configured to execute the computer program instructions. The computer program instructions are configured to cause the at least one processor to generate a trigger and a workflow for a graphical element based on input from a user provided to a trigger and workflow configuration interface. The computer program instructions are also configured to cause the at least one processor to generate an application front end and an automation including the generated trigger and workflow as part of a solution. Responsive to an event associated with the graphical element occurring in the application front end at runtime, the application front end is configured, via an event handler, to cause an attended or unattended RPA robot to execute the respective workflow for the graphical element at runtime.

### BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:
FIGS. 1A-J illustrate aspects of an end-to-end automation platform that provides a unified build, according to an embodiment of the present invention.
FIG. 2 is an architectural diagram illustrating a system that is configured to execute a unified project, according to an embodiment of the present invention.
FIG. 3 is an architectural diagram illustrating a hyper-automation system, according to an embodiment of the present invention.
FIG. 4 is an architectural diagram illustrating an RPA system, according to an embodiment of the present invention.
FIG. 5 is an architectural diagram illustrating a deployed RPA system, according to an embodiment of the present invention.
FIG. 6 is an architectural diagram illustrating the relationship between a designer, activities, and drivers, according to an embodiment of the present invention.
FIG. 7 is an architectural diagram illustrating a computing system configured to provide all or part of an end-to-end automation platform, according to an embodiment of the present invention.
FIG. 8 is a flowchart illustrating a process for creating a unified project using a unified build platform, according to an embodiment of the present invention.
FIGS. 9A and 9B are flowcharts illustrating a process for executing a unified project, according to an embodiment of the present invention.

Unless otherwise indicated, similar reference characters denote corresponding features consistently throughout the attached drawings.

### DETAILED DESCRIPTION OF THE EMBODIMENTS

Some embodiments pertain to an end-to-end automation platform that provides a common interface for building applications, data services, and integrations with other platforms (such as Amazon Web Services^{®}, Google Cloud^{®}, Microsoft Azure^{®}, SAP^{®}, Salesforce^{®}, etc. In other words, users can create processes (i.e., packages that, once deployed as a process by a conductor application, can be used to start jobs), queues (i.e., containers that can store items with multiple types of data for the conductor application, such as invoice information, customer details, etc.), entities (which enable records to be used from a data service and can be used in automation processes that collect, update, and pass data to other processes), connections (which help to establish tasks between single users and external applications), etc. in a single unified platform. Unified build/project provides a single seamless way of building potentially complex end-to-end automations in certain embodiments, which can be done significantly faster with minimum configuration. The user can build an application interface in a robotic process automation (RPA) development platform, such as UiPath Studio Web^{™}, and create workflows in the same interface without leaving the project. As such, the user does not need to switch between tools to build the applications, data services, and integrations. The user can leverage the array of activities available in the RPA development platform for handling events in the application, such as button clicks, dropdown value changes, page loads, etc. In some embodiments, the user can also build and publish the whole project as a single unit in a conductor application, such as UiPath Orchestrator^{™}, and seamlessly deploy applications along with the attached workflows with a single action.

Functionality for common use cases can be provided out-of-the-box, and/or the framework for these use cases can be provided where the user then fills in what is needed for the given application. In some embodiments, the RPA development platform asks the developer which enterprise systems will be used. This allows the RPA development platform to direct the user to the appropriate components for these systems.

A single canvas may be provided by the RPA development platform for various roles to collaborate, such as subject matter experts (SMEs), RPA developers, employees who manage the business process, etc. The automation platform "fabric" may bring tools contextually into focus regardless of the underlying technology that is being used. Multiple users can collaborate without configurable access control for resources that the automation depends on. Such packages open in the RPA designer application, such as UiPath Studio^{™} or Studio Web^{™}. Connections may be automatically configured for integration services, if possible.

There should be a consistent representation of the data model throughout the components so they can communicate with one another. This enables users to build interfaces, automations, custom connectors, document understanding models for classification/extraction, tasks, etc. in the same tool. In other words, the entire type system may be unified between applications and activities such that they are interoperable.

Users build the UI, and the event handlers for user interactions are automations (i.e., inline workflows). When the user launches one of these interfaces, the system automatically spins up a serverless robot or utilizes one that is already running. The application "calls" into the serverless robot when performing actions. In other words, the application causes the RPA robot to execute the appropriate workflow for a given action. This allows users to perform "attended" type actions on an unattended robot in a manner that is not possible with current RPA development platforms.

Code behind refers to the workflow code that runs behind the scenes when events happen on the applications, such as button clicks, dropdown value changes, page loads, etc. In other words, code behind represents the "code" or "business logic" that runs pursuant to these events. In the visual interface in some embodiments, when the user double-clicks the button, the RPA development application opens a page where the user can write code. The code behind the button will be invoked when the button is clicked (i.e., a click event generated by the operating system). The runtime flow may also be automated without user involvement. When specific events happen (e.g., a user clicks a button), the designated workflow is invoked on the same running job, and the result is sent back to the runtime instance of the application after completion of the workflow.

The "code behind" experience in some embodiments involves several independent pieces.

Design Time Experience: During the application design phase, users may have a tailored experience for creating workflows associated with specific events. This includes automatic workflow creation when adding logic to events, designing activities that interact with applications, and retrieving real-time data for design purposes. For instance, users may list all of the pages in an application or access specific properties of a control.

Runtime Experience: The runtime flow operates automatically without requiring user intervention in some embodiments. When the application is loaded during runtime, it initiates a serverless job that is executed by a serverless robot. If specific events occur, such as a user clicking a button, relevant data is transmitted to the remote serverless robot. The designated workflow is then invoked within the same running job, and upon completion, the result is seamlessly sent back to the runtime instance of the application. By using a pool of unattended serverless robots, the job startup latency of using a conductor application (typically 2-4 seconds) when a user clicks a button, for example, can be avoided. Such latency is unsuitable for a good user experience for form button clicks, text focus operations, populating dropdowns and lists, etc. Also, deployment of each entry point (e.g., each code-behind "snippet" for application components) as distinct processes in the conductor application can be avoided. In some embodiments, when an automation is run as an unattended job, the job starts, enters into the Main.xaml entry point, and runs a "Local Triggers" activity, thus entering into a wait loop that monitors for incoming events.

Application Activities: There are some dedicated new activities built from scratch for the purpose of interacting between the runtime instances of applications and running workflows in some embodiments. Each of these activities serves a specific purpose and help achieve specific tasks frequently needed for an application to work correctly. Some examples are provided below.

GetAppsValue: Gets value of control properties or application expressions into the workflow (e.g., "Hello " + MainPage.NameText.Value + ", the result is: " + Processes. MyProcess. Result).

SetAppsValue: Sends a value from the workflow to the runtime instance of the application.

ShowToastMessage: Shows a toast message on the runtime instance of the application.

OpenAppsPage: Navigates to a different page or shows a modal window on applications.

AppsRequestTrigger: An activity that dedicatedly handles the main command from applications (e.g., an InvokeWorkflowCommand for starting a workflow execution on application events). The user may not need to use this activity explicitly. Rather, it may be part of the default template and be automatically imported when a new application project is created in the RPA designer application.

In some embodiments, debugging functionality may be provided with integrations (e.g., processes, queues, etc.). Applications often include multiple pages with various controls and integrations. Users may have the ability to add debugging functionality throughout the application in such embodiments, including integrations. However, the interplay between control values and integration values within the application may lead to unexpected results if mistakes occur at any point. Identifying the source of these errors can be challenging.

Users have the ability in such embodiments to set debug points on expressions within the application. The application is running in debug mode in this case. When the expression changes (such as via integrations), a trigger alerts the user. If the expected results have not arrived, the alert allows users to quickly identify where issues occur and why the expected results have not been achieved. Additionally, when planning to write new expressions, it is advisable to first test them in evaluation mode. This way, users can understand how the expressions behave and make any necessary adjustments. During the application development process, the user has the flexibility to build both the application and its associated integrations within the same environment. Thus, the user can debug both the application and the process in the same environment.

### DESIGN TIME IMPLEMENTATION

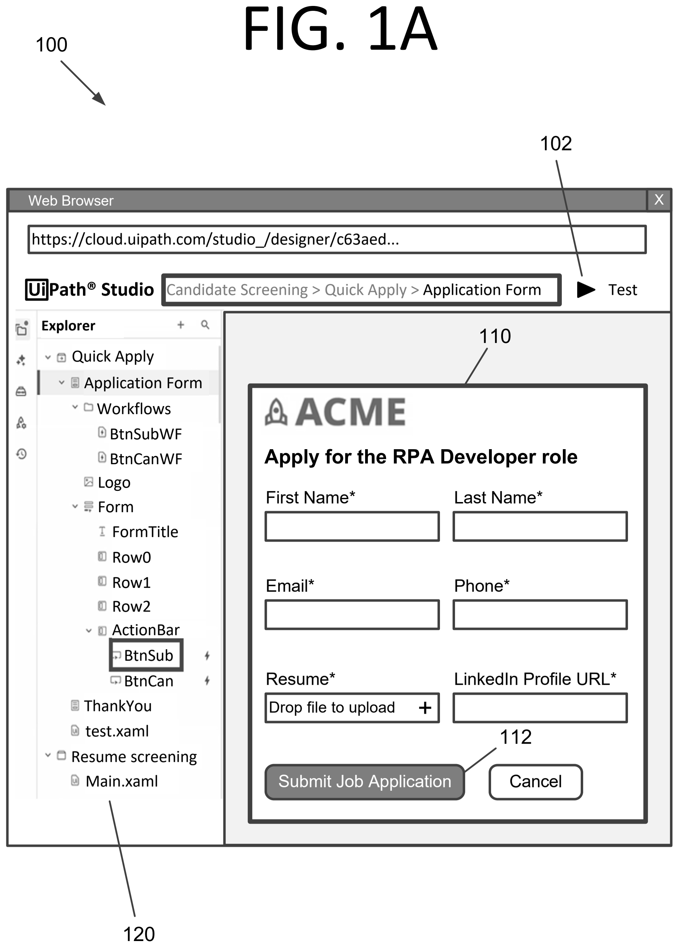

Referring to web RPA designer application 100 of FIG. 1A, consider the case of a resume screening project. Resumes are submitted through various channels, including email, web portals, and manual entry. In their example, resumes from multiple sources must be processed in the same way. In other words, the goal is to process all resumes consistently.

Initially, users create a project, test it thoroughly, and then deploy it as an end-to-end automation solution for candidate screening. When an applicant fills in the details in application 110 and clicks submit button 112, an associated workflow is triggered that starts a process that is responsible for handling the funnel of resumes from these different sources. An explorer menu 120 displays the various components of application 110. In explorer menu 120 each folder, such as "Workflows" and "Resume screening," is a project. All of these projects are included in one "unified" project.

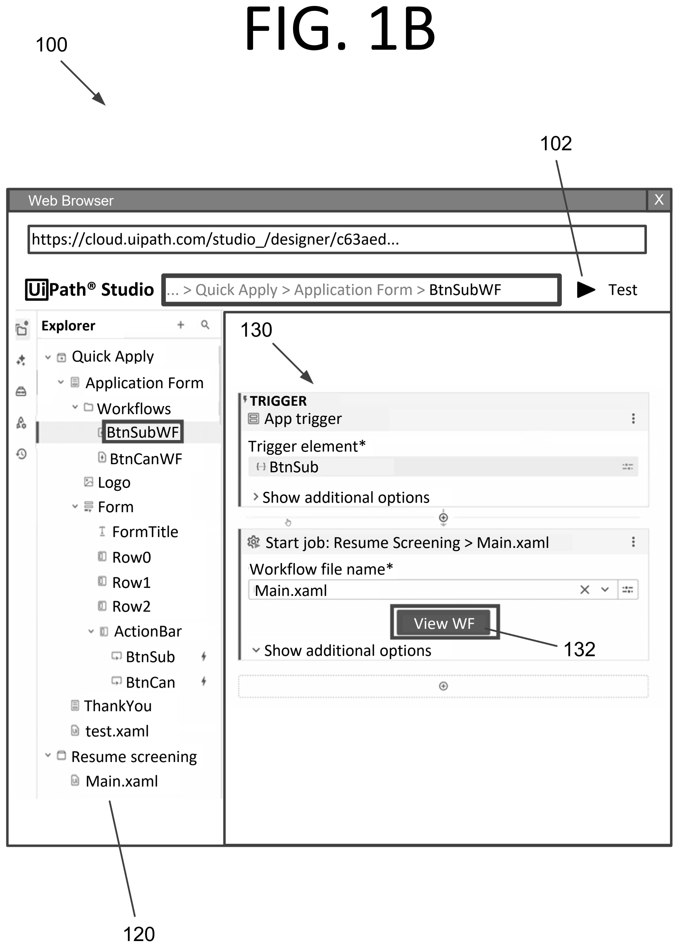

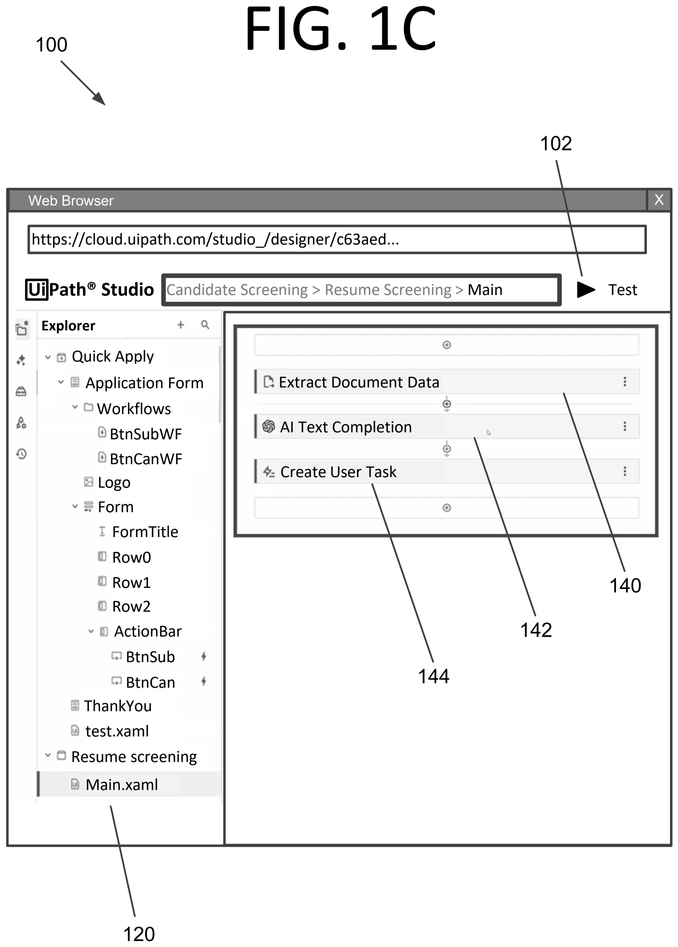

Trigger configuration options 130 appear when the user clicks submit button 112. See FIG. 1B. When the user clicks on view workflow button 132, the workflow extracts data from resumes via extract document data activity 140, uses artificial intelligence (AI) for text completion (e.g., Azure^{®} AI) via Al text completion activity 142 based on the role and resume characteristics for fitness, and creates and assigns a task to the hiring manager via create user task activity 144 to make a recommendation. See FIG. 1C. In the unified build of this embodiment, the application projects, such as automation, document understanding, integrations, etc., are all present in one place.

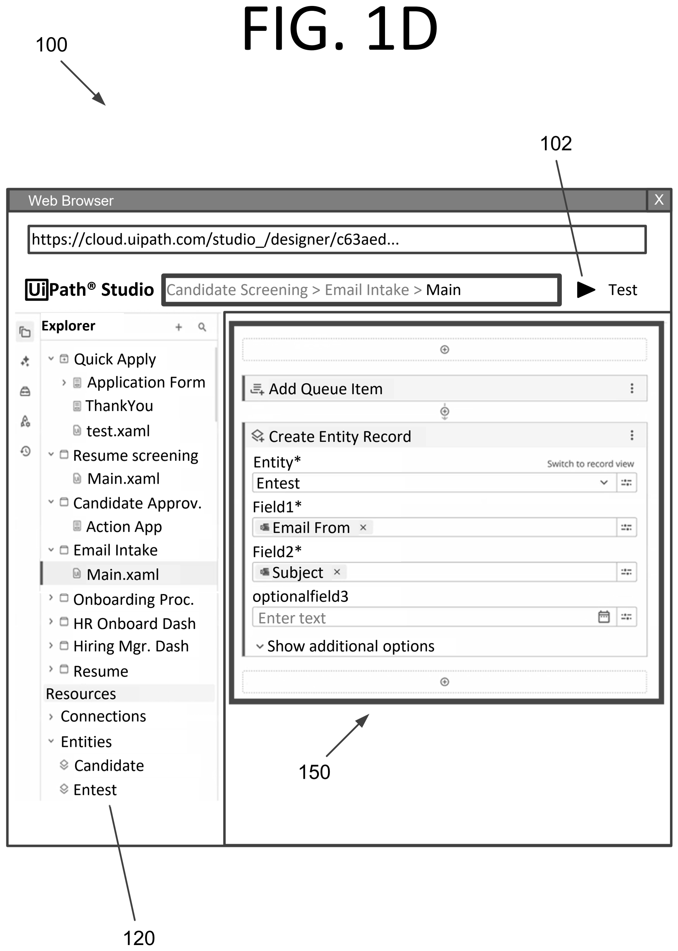

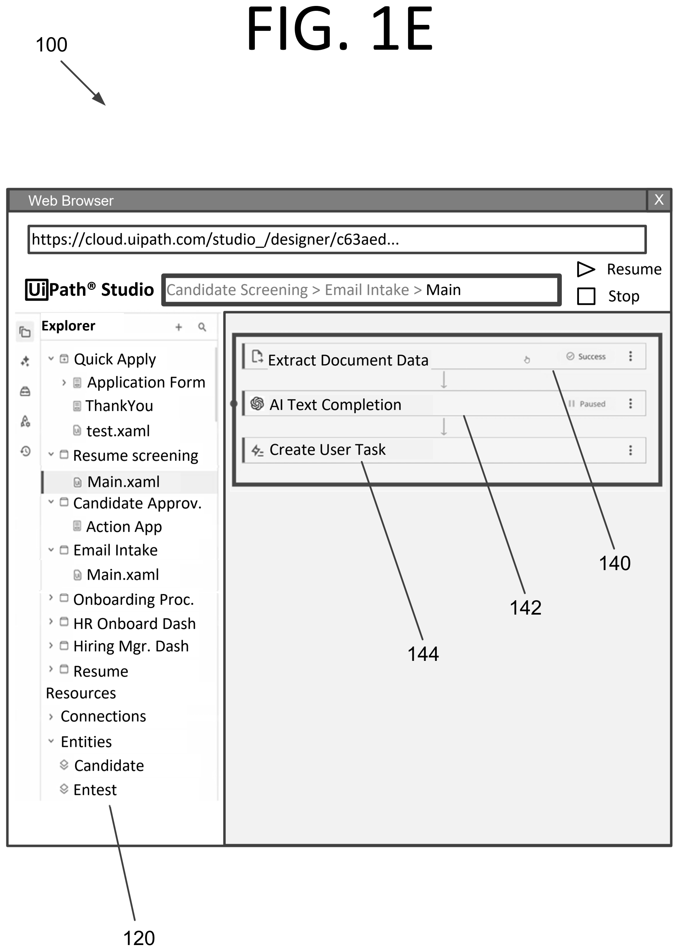

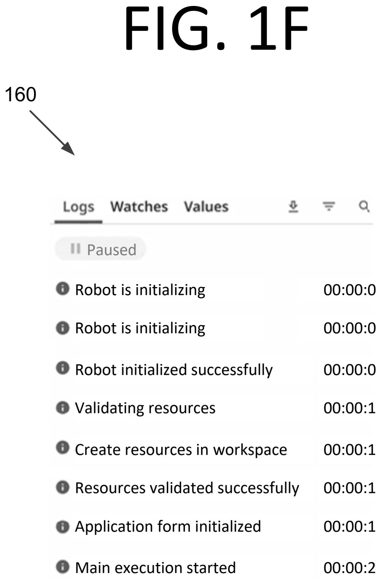

The user can define activity queues and create queue configurations. See queue configuration interface 150 of FIG. 1D. Previously, a queue would be required in the conductor application. Users can thus design the queue and create the configuration for the queue in the RPA designer application instead. In other words, the queue is created as a definition and does not yet exist in the conductor application. This facilitates just-in-time resource creation, where the resources are only generated code-wise when needed. After configuring the activities of the workflow, the user can hit test button 102 to test and debug it. See FIG. 1E. The operations that are performed during testing are also displayed. See testing status interface 160 of FIG. 1F.

Currently, debugging between different projects is not possible. Instead, each project is "sandboxed" such that they do not know what other projects are doing. By including the various projects in one unified build, users can verify that data was extracted properly by one project for use by another project.

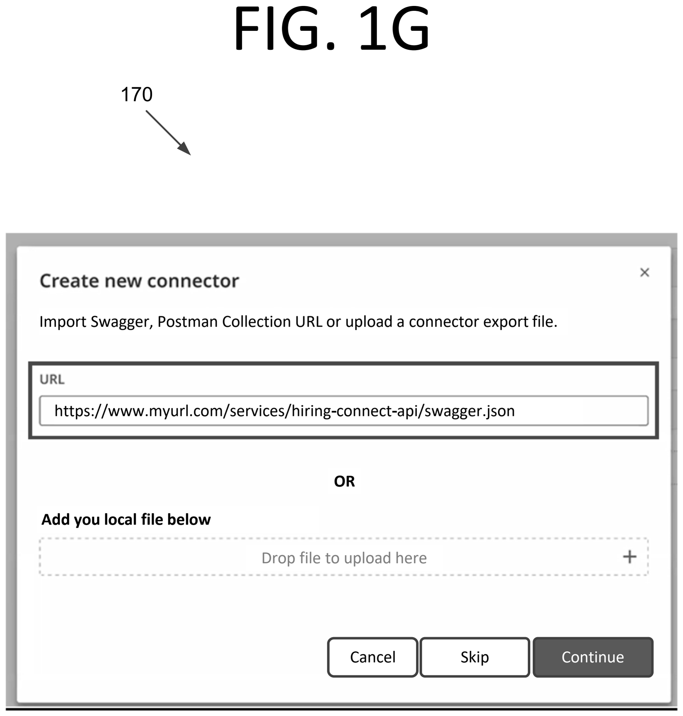

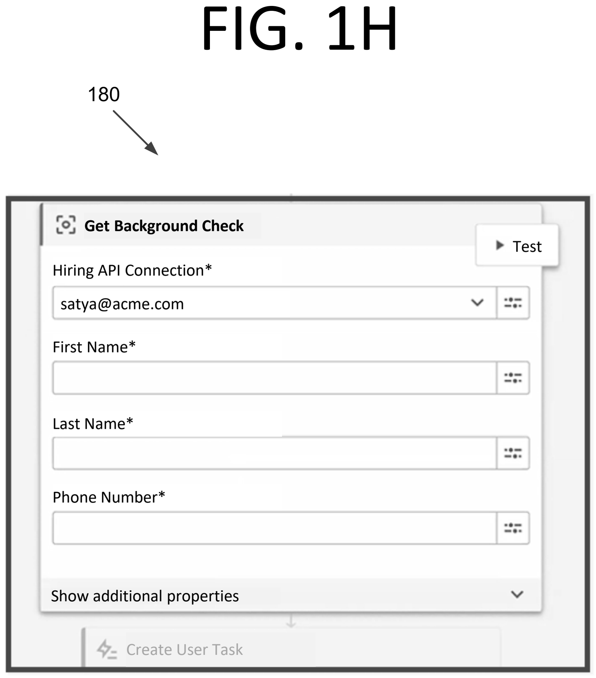

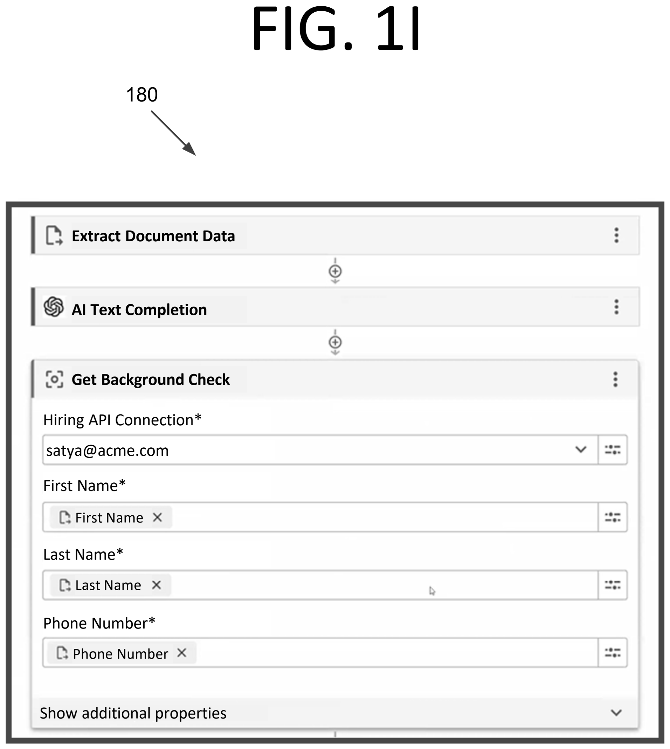

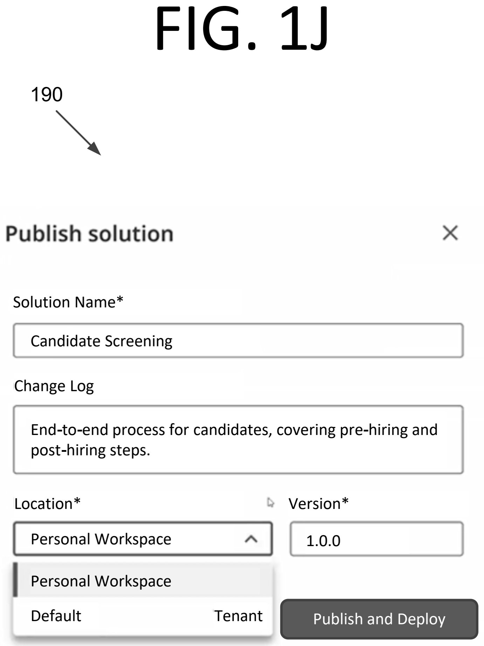

During the debugging process, background checks may be performed in some embodiments before creating user tasks. A custom activity may be created to accomplish this task in some embodiments. By configuring application programming interface (API) endpoints and thoroughly testing them, this functionality can be seamlessly inserted into the sequence. See new connector interface 170 of FIG. 1G, as well as background check interface 180 of FIGS. 1H and 1I. After the background checks are performed, a solution is created, which can be published and deployed. See publish solution interface of FIG. 1J. For instance, a solution can be a workflow or process, a combination of workflows or processes, apps, assets, queues, storage buckets, data service entities, machine learning (ML) skills, etc.

In the backend, the infrastructure of the solution project may be utilized to facilitate communication between various components. Additionally, the modular frontend enables seamless operation during design time. Applications, automations, and connector builders all operate within a unified space.

### RUNTIME IMPLEMENTATION

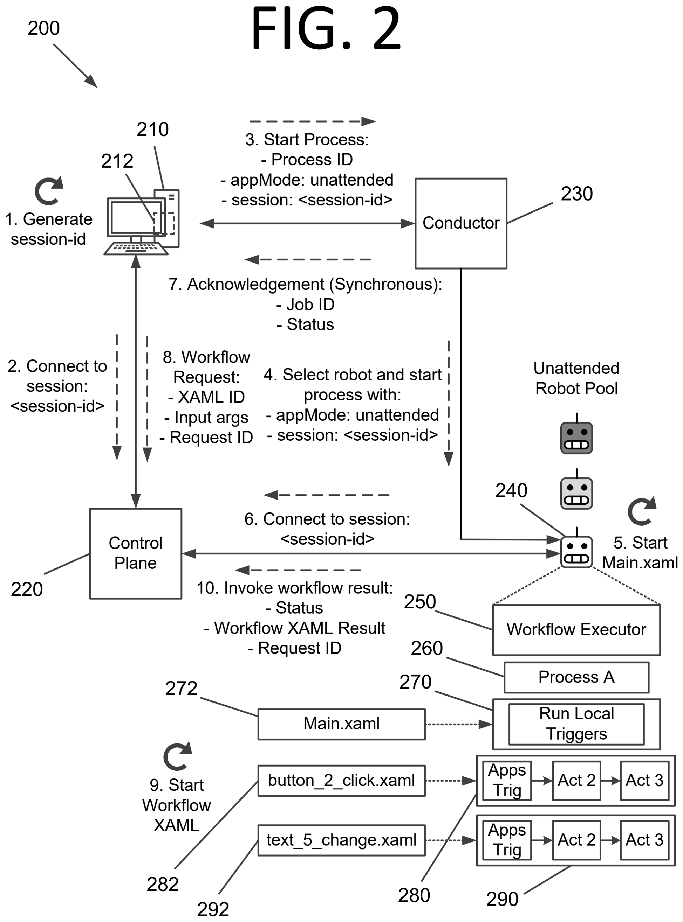

FIG. 2 is an architectural diagram illustrating a system 200 that is configured to execute a unified project, according to an embodiment of the present invention. A user computing system 210 (e.g., a desktop computer, a laptop computer, a smart phone, a smart watch, etc.) runs an application front end 212. A session-id is generated (1) by application front end 212, which uses the session-id to connect to a control plane 220 (e.g., an ASP.NET SignalR Hub) on page load using the session-id (2). In some embodiments, a logged in user has a field called hasCodeBehind that will be used upon initialization of the application to start the process. The user may be blocked from interacting with application front end 212 via a loader screen, disabling controls, etc. until acknowledgement of successful connection is received from control plane 220.

A process is also started (3) by a conductor application 230 for the session-id. Conductor application 230 selects an RPA robot 240 from an unattended robot pool and starts the process in unattended mode (4). Attended versus unattended robot operation is discussed in more detail later herein. RPA robot 240 then starts its Main.xaml 272 (5). Main.xaml runs local triggers 270 and waits for events from application front end 212 (e.g., button clicks).

A workflow executor 250 is called to execute the workflow. Each request may have a Request ID that can be used to map the request and response from the workflow. See the example code below.

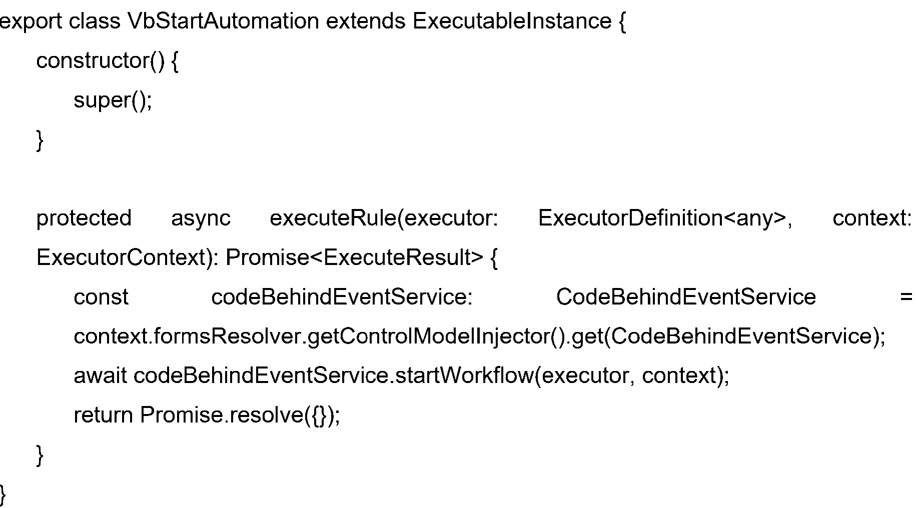

To handle long running processes, a process is started by RPA robot 240 (here, process A 260). Several mechanisms may be used to handle such processes. For instance, after a certain amount of time (e.g., 15 minutes), another process may be started, and a loader can be shown to the user until acknowledgement is received from conductor application 230 before the user can invoke another workflow via application front end 212. Workflow execution can be continued after this new process is started. However, if another execution is in progress, it would terminate abruptly.

Another approach is to maintain a list of currently running workflows that are in progress. After a certain amount of time, if there are pending workflows, users are notified and asked if they would like to retry execution. If yes, the execution of the workflow is retried with a new process. If not, the new process is started and the list of running workflows is cleared. This enables the user to continue execution once another process is started, or to retry workflow execution thereafter. However, the user will still have to rerun the workflow execution.

Yet another approach is to start another process before the currently running process is scheduled to terminate (e.g., 2 minutes before the currently running process will terminate). This can reduce the impact of workflow execution being terminated abruptly for workflows that do not take more than the remaining time before the currently running process terminates. This time may be decided based on the average time taken by workflows to complete, for example. A list of currently running workflows can also be maintained that are in progress with the currently running process. If there are pending workflows when the first process is terminated, the user may be notified and asked if he or she would like to retry.

RPA robot 240 connects to the session with the session-id via control plane 220 and conductor application 230 sends a synchronous acknowledgement to application front end 212 with the job ID and status. Application front end 212 can now receive and process user interactions. A workflow request with the Extensible Application Markup Language (XAML) ID, input arguments, and request ID is received by control plane 220 from application front end 212. RPA robot 240 then starts the associated workflow. In this example, the workflows are button_2_click.xaml 282 and text_5_change.xaml 292. These workflows each have a trigger and a series of actions 280, 290. Once the workflow for a given action runs, the result is provided by RPA robot 240 to control plane 220 and then to application front end 212.

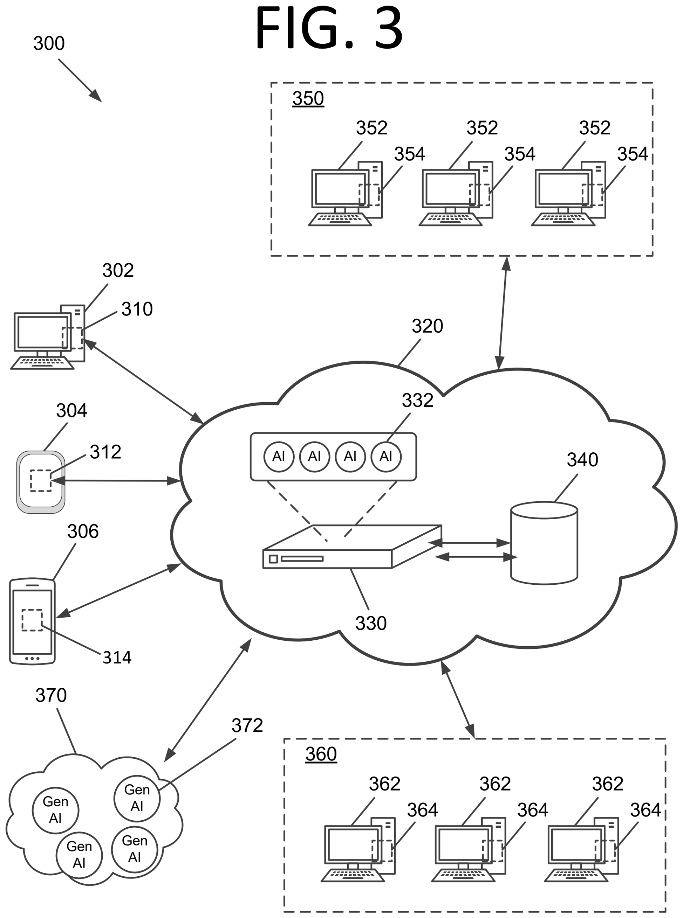

FIG. 3 is an architectural diagram illustrating a hyper-automation system 300, according to an embodiment of the present invention. "Hyper-automation," as used herein, refers to automation systems that bring together components of process automation, integration tools, and technologies that amplify the ability to automate work. For instance, RPA may be used at the core of a hyper-automation system in some embodiments, and in certain embodiments, automation capabilities may be expanded with AI/ML, process mining, analytics, and/or other advanced tools. As the hyper-automation system learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

Hyper-automation system 300 includes user computing systems, such as desktop computer 302, tablet 304, and smart phone 306. However, any desired user computing system may be used without deviating from the scope of the invention including, but not limited to, smart watches, laptop computers, servers, Internet-of-Things (IoT) devices, etc. Also, while three user computing systems are shown in FIG. 3, any suitable number of user computing systems may be used without deviating from the scope of the invention. For instance, in some embodiments, dozens, hundreds, thousands, or millions of user computing systems may be used. The user computing systems may be actively used by a user or run automatically without much or any user input.

Each user computing system 302, 304, 306 has respective automation process(es) 310, 312, 314 running thereon. In some embodiments, the automation processes are stored remotely (e.g., on server 330 or in database 340 and accessed via network 320) and loaded by RPA robots to implement the automation. Automations may exist as a script (e.g., Extensible Markup Language (XML), XAML, etc.) or be compiled into machine readable code (e.g., as a digital link library).

Automation process(es) 310, 312, 314 may include, but are not limited to, RPA robots, part of an operating system, downloadable application(s) for the respective computing system, any other suitable software and/or hardware, or any combination of these without deviating from the scope of the invention. In some embodiments, one or more of process(es) 310, 312, 314 may be listeners. Listeners may be RPA robots, part of an operating system, a downloadable application for the respective computing system, or any other software and/or hardware without deviating from the scope of the invention. Indeed, in some embodiments, the logic of the listener(s) is implemented partially or completely via physical hardware.

Listeners monitor and record data pertaining to user interactions with respective computing systems and/or operations of unattended computing systems and send the data to a core hyper-automation system 320 via a network (e.g., a local area network (LAN), a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from the listeners may be sent periodically as part of a heartbeat message. In some embodiments, the data may be sent to core hyper-automation system 320 once a predetermined amount of data has been collected, after a predetermined time period has elapsed, or both. One or more servers, such as server 330, receive and store data from the listeners in a database, such as database 340.

Automation processes may execute the logic developed in workflows during design time. In the case of RPA, workflows may include a set of steps, defined herein as "activities," that are executed in a sequence or some other logical flow. Each activity may include an action, such as clicking a button, reading a file, writing to a log panel, etc. In some embodiments, workflows may be nested or embedded.

Long-running workflows for RPA in some embodiments are master projects that support service orchestration, human intervention, and long-running transactions in unattended environments. See, for example, U.S. Patent No. 10,860,905, which is hereby incorporated by reference in its entirety. Human intervention comes into play when certain processes require human inputs to handle exceptions, approvals, or validation before proceeding to the next step in the activity. In this situation, the process execution is suspended, freeing up the RPA robots until the human task completes.

A long-running workflow may support workflow fragmentation via persistence activities and may be combined with invoke process and non-user interaction activities, orchestrating human tasks with RPA robot tasks. In some embodiments, multiple or many computing systems may participate in executing the logic of a long-running workflow. The long-running workflow may run in a session to facilitate speedy execution. In some embodiments, long-running workflows may orchestrate background processes that may contain activities performing API calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

One or more of automation process(es) 310, 312, 314 is in communication with core hyper-automation system 320. In some embodiments, core hyper-automation system 320 may run a conductor application on one or more servers, such as server 330. While one server 330 is shown for illustration purposes, multiple or many servers that are proximate to one another or in a distributed architecture may be employed without deviating from the scope of the invention. For instance, one or more servers may be provided for conductor functionality, AI/ML model serving, authentication, governance, and or any other suitable functionality without deviating from the scope of the invention. In some embodiments, core hyper-automation system 320 may incorporate or be part of a public cloud architecture, a private cloud architecture, a hybrid cloud architecture, etc. In certain embodiments, core hyper-automation system 320 may host multiple software-based servers on one or more computing systems, such as server 330. In some embodiments, one or more servers of core hyper-automation system 320, such as server 330, may be implemented via one or more virtual machines (VMs).

In some embodiments, one or more of automation process(es) 310, 312, 314 may call one or more AI/ML models 332 deployed on or accessible by core hyper-automation system 320 and trained to accomplish various tasks. For instance, AI/ML models 332 may include models trained to look for various application versions, perform computer vision (CV), perform optical character recognition (OCR), create UI descriptors, offer suggestions for next activities or sequences of activities in RPA workflows, etc. AI/ML models may be trained using labeled data that includes, but is not limited to, elements from data sources (e.g., web pages, forms, scanned documents, application interfaces, screens, etc.), previously created RPA workflows, screenshots of various application screens for various versions with their corresponding UI elements, libraries of UI objects, etc. Al/ML models 332 may be trained to achieve a desired confidence threshold while not being overfit to a given set of training data.

AI/ML models 332 may be trained for any suitable purpose without deviating from the scope of the invention, as will be discussed in more detail later herein. Two or more of AI/ML models 332 may be chained in some embodiments (e.g., in series, in parallel, or a combination thereof) such that they collectively provide collaborative output(s). AI/ML models 132 may perform or assist with CV, OCR, document processing and/or understanding, semantic learning and/or analysis, analytical predictions, process discovery, task mining, testing, automatic RPA workflow generation, sequence extraction, clustering detection, audio-to-text translation, any combination thereof, etc. However, any desired number and/or type(s) of Al/ML models may be used without deviating from the scope of the invention. Using multiple Al/ML models may allow the system to develop a global picture of what is happening on a given computing system, for example. For instance, one Al/ML model could perform OCR, another could detect buttons, another could compare sequences, etc. Patterns may be determined individually by an Al/ML model or collectively by multiple Al/ML models. In certain embodiments, one or more Al/ML models are deployed locally on at least one of computing systems 302, 304, 306.

In some embodiments, multiple Al/ML models 332 may be used. Each AI/ML model 332 is an algorithm (or model) that runs on the data, and the Al/ML model itself may be a deep learning neural network (DLNN) of trained artificial "neurons" that are trained on training data, for example. In some embodiments, Al/ML models 332 may have multiple layers that perform various functions, such as statistical modeling (e.g., hidden Markov models (HMMs)), and utilize deep learning techniques (e.g., long short term memory (LSTM) deep learning, encoding of previous hidden states, etc.) to perform the desired functionality.

Hyper-automation system 300 may provide four main groups of functionality in some embodiments: (1) discovery; (2) building automations; (3) management; and (4) engagement. Automations (e.g., run on a user computing system, a server, etc.) may be run by software robots, such as RPA robots, in some embodiments. For instance, attended robots, unattended robots, and/or test robots may be used. Attended robots work with users to assist them with tasks (e.g., via UiPath Assistant^{™}). Unattended robots work independently of users and may run in the background, potentially without user knowledge. Test robots are unattended robots that run test cases against applications or RPA workflows. Test robots may be run on multiple computing systems in parallel in some embodiments.

The discovery functionality may discover and provide automatic recommendations for different opportunities of automations of business processes. Such functionality may be implemented by one or more servers, such as server 330. The discovery functionality may include providing an automation hub, process mining, task mining, and/or task capture in some embodiments. The automation hub (e.g., UiPath Automation Hub^{™}) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud^{™} and/or UiPath Al Center^{™}) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from user computing systems 302, 304, 306 by listeners, for example, and processed by servers, such as server 330. One or more Al/ML models 332 may be employed for this purpose in some embodiments. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud^{™} and/or UiPath Al Center^{™}) identifies and aggregates workflows (e.g., employee workflows), and then applies Al to expose patterns and variations in day-to-day tasks, scoring such tasks for ease of automation and potential savings (e.g., time and/or cost savings). One or more AI/ML models 332 may be employed to uncover recurring task patterns in the data. Repetitive tasks that are ripe for automation may then be identified. This information may initially be provided by listeners and analyzed on servers of core hyper-automation system 320, such as server 330, in some embodiments. The findings from task mining (e.g., XAML process data) may be exported to process documents or to a designer application such as UiPath Studio^{™} to create and deploy automations more rapidly. Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud^{™} and/or UiPath Al Center^{™}) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word^{®} documents, XAML files, and the like. Build-ready workflows may be exported directly to a designer application in some embodiments, such as UiPath Studio^{™}. Task capture may simplify the requirements gathering process for both subject matter experts explaining a process and Center of Excellence (CoE) members providing production-grade automations.

Building automations may be accomplished via a designer application (e.g., UiPath Studio^{™}, UiPath StudioX^{™}, or UiPath Studio Web^{™}). For instance, RPA developers of an RPA development facility 350 may use RPA designer applications 354 of computing systems 352 to build and test automations for various applications and environments, such as web, mobile, SAP^{®}, and virtualized desktops. API integration may be provided for various applications, technologies, and platforms. Predefined activities, drag-and-drop modeling, and a workflow recorder, may make automation easier with minimal coding. Document understanding functionality may be provided via drag-and-drop Al skills for data extraction and interpretation that call one or more Al/ML models 332. Such automations may process virtually any document type and format, including tables, checkboxes, signatures, and handwriting. When data is validated or exceptions are handled, this information may be used to retrain the respective Al/ML models, improving their accuracy over time.

RPA designer application 352 may be designed to call one or more of trained Al/ML models 332 on server 330 and/or generative Al models 372 in a cloud environment via network 320 (e.g., a LAN, a mobile communications network, a satellite communications network, the Internet, any combination thereof, etc.) to assist with the RPA automation development process. In some embodiments, one or more of the AI/ML models may be packaged with RPA designer application 352 or otherwise stored locally on computing system 350.

In some embodiments, RPA designer application 352 and one or more of Al/ML models 332 may be configured to use an object repository stored in database 340. The object repository may include libraries of UI objects that can be used to develop RPA workflows via RPA designer application 352. The object repository may be used to add UI descriptors to activities in the workflows of RPA designer application 352 for UI automations. In some embodiments, one or more of AI/ML models 332 may generate new UI descriptors and add them to the object repository in database 340. Once automations are completed in designer application 352, they may be published on server 330, pushed out to computing systems 302, 304, 306, etc.

An integration service may allow developers to seamlessly combine UI automation with API automation, for example. Automations may be built that require APIs or traverse both API and non-API applications and systems. A repository (e.g., UiPath Object Repository^{™}) or marketplace (e.g., UiPath Marketplace^{™}) for pre-built RPA and Al templates and solutions may be provided to allow developers to automate a wide variety of processes more quickly. Thus, when building automations, hyper-automation system 300 may provide user interfaces, development environments, API integration, pre-built and/or custom-built AI/ML models, development templates, integrated development environments (IDEs), and advanced Al capabilities. Hyper-automation system 300 enables development, deployment, management, configuration, monitoring, debugging, and maintenance of RPA robots in some embodiments, which may provide automations for hyper-automation system 300.

In some embodiments, components of hyper-automation system 300, such as designer application(s) and/or an external rules engine, provide support for managing and enforcing governance policies for controlling various functionality provided by hyper-automation system 300. Governance is the ability for organizations to put policies in place to prevent users from developing automations (e.g., RPA robots) capable of taking actions that may harm the organization, such as violating the E.U. General Data Protection Regulation (GDPR), the U.S. Health Insurance Portability and Accountability Act (HIPAA), third party application terms of service, etc. Since developers may otherwise create automations that violate privacy laws, terms of service, etc. while performing their automations, some embodiments implement access control and governance restrictions at the robot and/or robot design application level. This may provide an added level of security and compliance into to the automation process development pipeline in some embodiments by preventing developers from taking dependencies on unapproved software libraries that may either introduce security risks or work in a way that violates policies, regulations, privacy laws, and/or privacy policies. See, for example, U.S. Patent No. 11,733,668, which is hereby incorporated by reference in its entirety.

The management functionality may provide management, deployment, and optimization of automations across an organization. The management functionality may include orchestration, test management, Al functionality, and/or insights in some embodiments. Management functionality of hyper-automation system 300 may also act as an integration point with third-party solutions and applications for automation applications and/or RPA robots. The management capabilities of hyper-automation system 300 may include, but are not limited to, facilitating provisioning, deployment, configuration, queuing, monitoring, logging, and interconnectivity of RPA robots, among other things.

A conductor application, such as UiPath Orchestrator^{™} (which may be provided as part of the UiPath Automation Cloud^{™} in some embodiments, or on premises, in VMs, in a private or public cloud, in a Linux^{™} VM, or as a cloud native single container suite via UiPath Automation Suite^{™}), provides orchestration capabilities to deploy, monitor, optimize, scale, and ensure security of RPA robot deployments. A test suite (e.g., UiPath Test Suite^{™}) may provide test management to monitor the quality of deployed automations. The test suite may facilitate test planning and execution, meeting of requirements, and defect traceability. The test suite may include comprehensive test reporting.

Analytics software (e.g., UiPath Insights^{™}) may track, measure, and manage the performance of deployed automations. The analytics software may align automation operations with specific key performance indicators (KPIs) and strategic outcomes for an organization. The analytics software may present results in a dashboard format for better understanding by human users.

A data service (e.g., UiPath Data Service^{™}) may be stored in database 340, for example, and bring data into a single, scalable, secure place with a drag-and-drop storage interface. Some embodiments may provide low-code or no-code data modeling and storage to automations while ensuring seamless access, enterprise-grade security, and scalability of the data. AI functionality may be provided by an Al center (e.g., UiPath Al Center^{™}), which facilitates incorporation of AI/ML models into automations. Pre-built AI/ML models, model templates, and various deployment options may make such functionality accessible even to those who are not data scientists. Deployed automations (e.g., RPA robots) may call AI/ML models from the Al center, such as AI/ML models 332. Performance of the Al/ML models may be monitored, and be trained and improved using human-validated data, such as that provided by data review center 360. Human reviewers may provide labeled data to core hyper-automation system 320 via a review application 364 on computing systems 362. For instance, human reviewers may validate that predictions by Al/ML models 332 and/or generative Al models 372 are accurate or provide corrections otherwise. This dynamic input may then be saved as training data for retraining AI/ML models 332 and/or generative Al models 372, and may be stored in a database such as database 340, for example. The Al center may then schedule and execute training jobs to train the new versions of the Al/ML models using the training data. Both positive and negative examples may be stored and used for retraining of AI/ML models 332 and/or generative Al models 372.

The engagement functionality engages humans and automations as one team for seamless collaboration on desired processes. Low-code applications may be built (e.g., via UiPath Apps^{™}) to connect browser tabs and legacy software, even that lacking APIs in some embodiments. Applications may be created quickly using a web browser through a rich library of drag-and-drop controls, for instance. An application can be connected to a single automation or multiple automations.

An action center (e.g., UiPath Action Center^{™}) provides a straightforward and efficient mechanism to hand off processes from automations to humans, and vice versa. Humans may provide approvals or escalations, make exceptions, etc. The automation may then perform the automatic functionality of a given workflow.

A local assistant may be provided as a launchpad for users to launch automations (e.g., UiPath Assistant^{™}). This functionality may be provided in a tray provided by an operating system, for example, and may allow users to interact with RPA robots and RPA robot-powered applications on their computing systems. An interface may list automations approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

Chatbots (e.g., UiPath Chatbots^{™}), social messaging applications, an/or voice commands may enable users to run automations. This may simplify access to information, tools, and resources users need in order to interact with customers or perform other activities. Conversations between people may be readily automated, as with other processes. Trigger RPA robots kicked off in this manner may perform operations such as checking an order status, posting data in a CRM, etc., potentially using plain language commands.

End-to-end measurement and government of an automation program at any scale may be provided by hyper-automation system 300 in some embodiments. Per the above, analytics may be employed to understand the performance of automations (e.g., via UiPath Insights^{™}). Data modeling and analytics using any combination of available business metrics and operational insights may be used for various automated processes. Custom-designed and pre-built dashboards allow data to be visualized across desired metrics, new analytical insights to be discovered, performance indicators to be tracked, ROI to be discovered for automations, telemetry monitoring to be performed on user computing systems, errors and anomalies to be detected, and automations to be debugged. An automation management console (e.g., UiPath Automation Ops^{™}) may be provided to manage automations throughout the automation lifecycle. An organization may govern how automations are built, what users can do with them, and which automations users can access.

Hyper-automation system 300 provides an iterative platform in some embodiments. Processes can be discovered, automations can be built, tested, and deployed, performance may be measured, use of the automations may readily be provided to users, feedback may be obtained, Al/ML models may be trained and retrained, and the process may repeat itself. This facilitates a more robust and effective suite of automations.

In some embodiments, generative Al models are used. Generative Al can generate various types of content, such as text, imagery, audio, and synthetic data. Various types of generative Al models may be used, including, but not limited to, large language models (LLMs), generative adversarial networks (GANs), variational autoencoders (VAEs), transformers, etc. These models may be part of AI/ML models 332 hosted on server 330 in some embodiments. For instance, the generative Al models may be trained on a large corpus of textual information to perform semantic understanding, to understand the nature of what is present on a screen from text, to automatically generate code, and the like. In certain embodiments, generative Al models 372 provided by an existing cloud ML service provider, such as OpenAI^{®}, Google^{®}, Amazon^{®}, Microsoft^{®}, IBM^{®}, Nvidia^{®}, Meta^{®}, etc., may be employed and trained to provide such functionality. In generative Al embodiments where generative Al model(s) 372 are remotely hosted, server 330 can be configured to integrate with third-party APIs, which allow server 330 to send a request to generative Al model(s) 372 including the requisite input information and receive a response in return (e.g., the semantic matches of fields between application versions, a classification of the type of the application on the screen, etc.). Such embodiments may provide a more advanced and sophisticated user experience, as well as provide access to state-of-the-art natural language processing (NLP) and other ML capabilities that these companies offer.

One aspect of generative Al models in some embodiments is the use of transfer learning. In transfer learning, a pretrained generative Al mode, such as an LLM, is fine-tuned on a specific task or domain. This allows the LLM to leverage the knowledge already learned during its initial training and adapt it to a specific application. In the case of LLMs, the pretraining phase involves training an LLM on a large corpus of text, typically consisting of billions of words. During this phase, the LLM learns the semantic relationships between words and phrases, which enables the LLM to generate coherent and human-like responses to text-based inputs. The output of this pretraining phase is an LLM that has a high level of understanding of the underlying patterns in natural language.

In the fine-tuning phase, the pretrained LLM is adapted to a specific task or domain by training the LLM on a smaller dataset that is specific to the task. For instance, in some embodiments, the LLM may be trained to analyze a certain type or multiple types of data sources to improve its accuracy with respect to their content. Such information may be provided as part of the training data, and the LLM may learn to focus on these areas and more accurately identify data elements therein. Fine-tuning allows the LLM to learn the nuances of the task or domain, such as the specific vocabulary and syntax used in that domain, without requiring as much data as would be necessary to train an LLM from scratch. By leveraging the knowledge learned in the pretraining phase, the fine-tuned LLM can achieve state-of-the-art performance on specific tasks with a relatively small amount of training data.

LLMs may be trained using a corpus. Vector databases index, store, and provide access to structured or unstructured data (e.g., text, images, time series data, etc.) alongside the vector embeddings thereof. Data such as text may be tokenized, where single letters, words, or sequences of words are parsed from the text into tokens. Token-to-embedding mappings are typically learned as part of an end-to-end model, which are the numerical representations of this data. Vector databases allow users to find and retrieve similar objects quickly and at scale in production environments.

Al and ML allow unstructured data to be numerically represented without losing the semantic meaning thereof in vector embeddings. A vector embedding is a long list of numbers, each describing a feature of the data object that the vector embedding represents. Multiple coordinates together code for features that are meaningful to humans, somewhat analogous to how genes are made up of multiple base pairs. Similar objects are grouped together in the vector space. In other words, the more similar the objects are, the closer that the vector embeddings representing the objects will be to one another. Similar objects may be found using a vector search, similarity search, or semantic search. The distance between the vector embeddings may be calculated using various techniques including, but not limited to, squared Euclidean or L2-squared distance, Manhattan or L1 distance, cosine similarity, dot product, Hamming distance, etc. It may be beneficial to select the same metric that is used to train the AI/ML model.

Vector indexing may be used to organize vector embeddings so data can be retrieved efficiently. Calculating the distance between a vector embedding and all other vector embeddings in the vector database using the k-Nearest Neighbors (kNN) algorithm can be computationally expensive if there are a large number of data points since the required calculations increase linearly (O(n)) with the dimensionality and the number of data points. It is more efficient to find similar objects using an approximate nearest neighbor (ANN) approach. The distances between the vector embeddings are pre-calculated, and similar vectors are organized and stored close to one another (e.g., in clusters or a graph) similar objects can be found faster. This process is called "vector indexing." ANN algorithms that may be used in some embodiments include, but are not limited to, clusteringbased indexing, proximity graph-based indexing, tree-based indexing, hash-based indexing, compression-based indexing, etc.

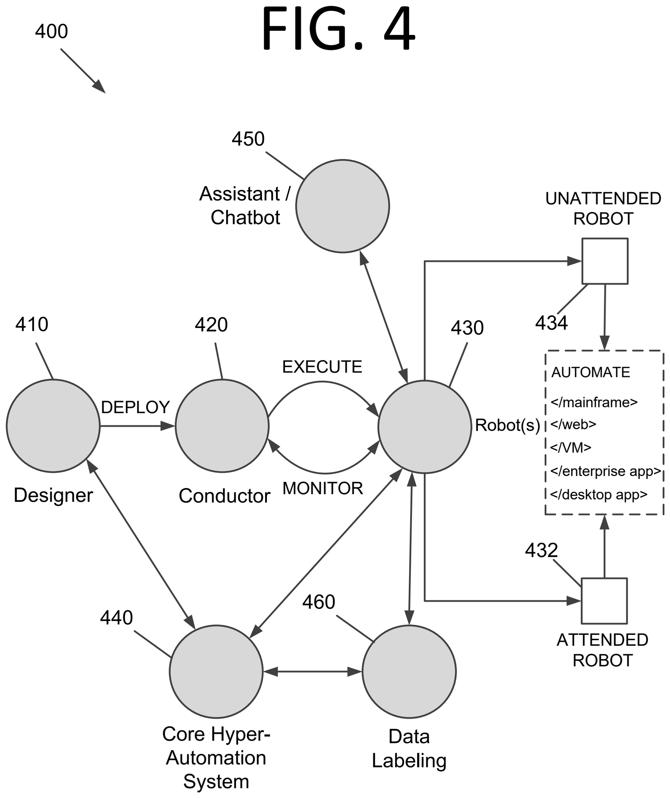

FIG. 4 is an architectural diagram illustrating an RPA system 400, according to an embodiment of the present invention. In some embodiments, RPA system 400 is part of hyper-automation system 300 of FIG. 3. RPA system 400 includes a designer 410 that allows a developer to design and implement workflows. Designer 410 may provide a solution for application integration, as well as automating third-party applications, administrative Information Technology (IT) tasks, and business IT processes. Designer 410 may facilitate development of an automation project, which is a graphical representation of a business process. Simply put, designer 410 facilitates the development and deployment of workflows and robots. In some embodiments, designer 410 may be an application that runs on a user's desktop, an application that runs remotely in a VM, a web application, etc.

The automation project enables automation of rule-based processes by giving the developer control of the execution order and the relationship between a custom set of steps developed in a workflow, defined herein as "activities" per the above. One commercial example of an embodiment of designer 410 is UiPath Studio^{™}. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable for more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed in designer 410, execution of business processes is orchestrated by conductor 420, which orchestrates one or more robots 430 that execute the workflows developed in designer 410. One commercial example of an embodiment of conductor 420 is UiPath Orchestrator^{™}. Conductor 420 facilitates management of the creation, monitoring, and deployment of resources in an environment. Conductor 420 may act as an integration point with third-party solutions and applications. Per the above, in some embodiments, conductor 420 may be part of core hyper-automation system 320 of FIG. 3.

Conductor 420 may manage a fleet of robots 430, connecting and executing robots 430 from a centralized point. Types of robots 430 that may be managed include, but are not limited to, attended robots 432, unattended robots 434, development robots (similar to unattended robots 434, but used for development and testing purposes), and nonproduction robots (similar to attended robots 432, but used for development and testing purposes). Attended robots 432 are triggered by user events and operate alongside a human on the same computing system. Attended robots 432 may be used with conductor 420 for a centralized process deployment and logging medium. Attended robots 432 may help the human user accomplish various tasks, and may be triggered by user events. In some embodiments, processes cannot be started from conductor 420 on this type of robot and/or they cannot run under a locked screen. In certain embodiments, attended robots 432 can only be started from a robot tray or from a command prompt. Attended robots 432 should run under human supervision in some embodiments.

Unattended robots 434 run unattended in virtual environments and can automate many processes. Unattended robots 434 may be responsible for remote execution, monitoring, scheduling, and providing support for work queues. Debugging for all robot types may be run in designer 410 in some embodiments. Both attended and unattended robots may automate various systems and applications including, but not limited to, mainframes, web applications, VMs, enterprise applications (e.g., those produced by SAP^{®}, SalesForce^{®}, Oracle^{®}, etc.), and computing system applications (e.g., desktop and laptop applications, mobile device applications, wearable computer applications, etc.).

Conductor 420 may have various capabilities including, but not limited to, provisioning, deployment, configuration, queueing, monitoring, logging, and/or providing interconnectivity. Provisioning may include creating and maintenance of connections between robots 430 and conductor 420 (e.g., a web application). Deployment may include assuring the correct delivery of package versions to assigned robots 430 for execution. Configuration may include maintenance and delivery of robot environments and process configurations. Queueing may include providing management of queues and queue items. Monitoring may include keeping track of robot identification data and maintaining user permissions. Logging may include storing and indexing logs to a database (e.g., a structured query language (SQL) database or a "not only" SQL (NoSQL) database) and/or another storage mechanism (e.g., ElasticSearch^{®}, which provides the ability to store and quickly query large datasets). Conductor 420 may provide interconnectivity by acting as the centralized point of communication for third-party solutions and/or applications.

Robots 430 are execution agents that implement workflows built in designer 410. One commercial example of some embodiments of robot(s) 430 is UiPath Robots^{™}. In some embodiments, robots 430 install the Microsoft Windows^{®} Service Control Manager (SCM)-managed service by default. As a result, such robots 430 can open interactive Windows^{®} sessions under the local system account, and have the rights of a Windows^{®} service.

In some embodiments, robots 430 can be installed in a user mode. For such robots 430, this means they have the same rights as the user under which a given robot 430 has been installed. This feature may also be available for High Density (HD) robots, which ensure full utilization of each machine at its maximum potential. In some embodiments, any type of robot 430 may be configured in an HD environment.

Robots 430 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows^{®} sessions and act as a proxy between conductor 420 and the execution hosts (i.e., the computing systems on which robots 430 are executed). These services are trusted with and manage the credentials for robots 430. A console application is launched by the SCM under the local system.

User mode robot services in some embodiments manage and monitor Windows^{®} sessions and act as a proxy between conductor 420 and the execution hosts. User mode robot services may be trusted with and manage the credentials for robots 430. A Windows^{®} application may automatically be launched if the SCM-managed robot service is not installed.

Executors may run given jobs under a Windows^{®} session (i.e., they may execute workflows. Executors may be aware of per-monitor dots per inch (DPI) settings. Agents may be Windows^{®} Presentation Foundation (WPF) applications that display the available jobs in the system tray window. Agents may be a client of the service. Agents may request to start or stop jobs and change settings. The command line is a client of the service. The command line is a console application that can request to start jobs and waits for their output.

Having components of robots 430 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from designer 410 may also be independent of browser zoom level in some embodiments. For applications that are DPI-unaware or intentionally marked as unaware, DPI may be disabled in some embodiments.

RPA system 400 in this embodiment is part of a hyper-automation system. Developers may use designer 410 to build and test RPA robots that utilize AI/ML models deployed in core hyper-automation system 440 (e.g., as part of an Al center thereof). Such RPA robots may send input for execution of the AI/ML model(s) and receive output therefrom via core hyper-automation system 440.

One or more of robots 430 may be listeners, as described above. These listeners may provide information to core hyper-automation system 440 regarding what users are doing when they use their computing systems. This information may then be used by core hyper-automation system for process mining, task mining, task capture, etc.

An assistant/chatbot 450 may be provided on user computing systems to allow users to launch RPA local robots. The assistant may be located in a system tray, for example. Chatbots may have a user interface so users can see text in the chatbot. Alternatively, chatbots may lack a user interface and run in the background, listening using the computing system's microphone for user speech.

In some embodiments, data labeling may be performed by a user of the computing system on which a robot is executing or on another computing system that the robot provides information to. For instance, if a robot calls an AI/ML model that performs CV on images for VM users, but the Al/ML model does not correctly identify a button on the screen, the user may draw a rectangle around the misidentified or non-identified component and potentially provide text with a correct identification. This information may be provided to core hyper-automation system 440 and then used later for training a new version of the Al/ML model.

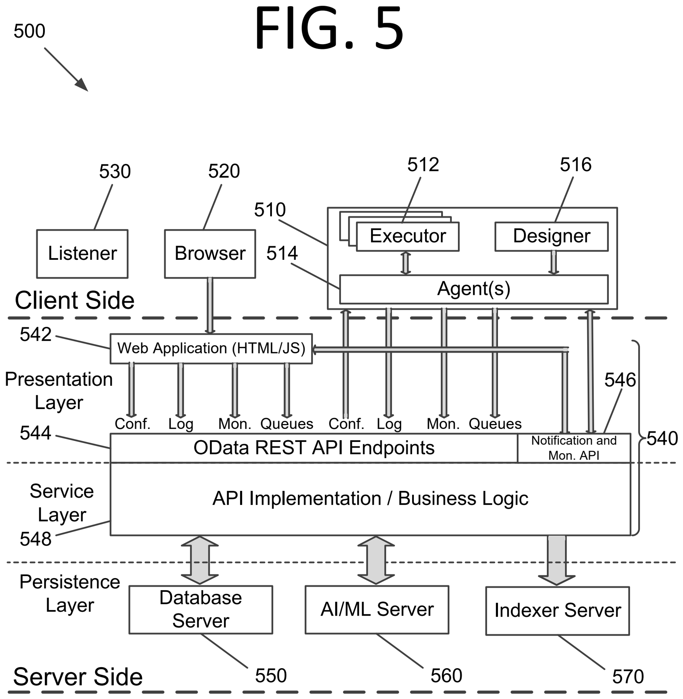

FIG. 5 is an architectural diagram illustrating a deployed RPA system 500, according to an embodiment of the present invention. In some embodiments, RPA system 500 may be a part of RPA system 400 of FIG. 4 and/or hyper-automation system 300 of FIG. 3. Deployed RPA system 500 may be a cloud-based system, an on-premises system, a desktop-based system that offers enterprise level, user level, or device level automation solutions for automation of different computing processes, etc.

It should be noted that the client side, the server side, or both, may include any desired number of computing systems without deviating from the scope of the invention. On the client side, a robot application 510 includes executors 512, an agent 514, and a designer 516. However, in some embodiments, designer 516 may not be running on the same computing system as executors 512 and agent 514. Executors 512 are running processes. Several business projects may run simultaneously, as shown in FIG. 5. Agent 514 (e.g., a Windows^{®} service) is the single point of contact for all executors 512 in this embodiment. All messages in this embodiment are logged into conductor 540, which processes them further via database server 550, an AI/ML server 560, an indexer server 570, or any combination thereof. As discussed above with respect to FIG. 4, executors 512 may be robot components.

In some embodiments, a robot represents an association between a machine name and a username. The robot may manage multiple executors at the same time. On computing systems that support multiple interactive sessions running simultaneously (e.g., Windows^{®} Server 2012), multiple robots may be running at the same time, each in a separate Windows^{®} session using a unique username. This is referred to as HD robots above.

Agent 514 is also responsible for sending the status of the robot (e.g., periodically sending a "heartbeat" message indicating that the robot is still functioning) and downloading the required version of the package to be executed. The communication between agent 514 and conductor 540 is always initiated by agent 514 in some embodiments. In the notification scenario, agent 514 may open a WebSocket channel that is later used by conductor 540 to send commands to the robot (e.g., start, stop, etc.).

A listener 530 monitors and records data pertaining to user interactions with an attended computing system and/or operations of an unattended computing system on which listener 530 resides. Listener 530 may be an RPA robot, part of an operating system, a downloadable application for the respective computing system, or any other software and/or hardware without deviating from the scope of the invention. Indeed, in some embodiments, the logic of the listener is implemented partially or completely via physical hardware.

On the server side, a presentation layer (web application 542, Open Data Protocol (OData) Representative State Transfer (REST) Application Programming Interface (API) endpoints 544, and notification and monitoring 546), a service layer (API implementation / business logic 548), and a persistence layer (database server 550, Al/ML server 560, and indexer server 570) are included. Conductor 540 includes web application 542, OData REST API endpoints 544, notification and monitoring 546, and API implementation / business logic 548. In some embodiments, most actions that a user performs in the interface of conductor 540 (e.g., via browser 520) are performed by calling various APIs. Such actions may include, but are not limited to, starting jobs on robots, adding/removing data in queues, scheduling jobs to run unattended, etc. without deviating from the scope of the invention. Web application 542 is the visual layer of the server platform. In this embodiment, web application 542 uses Hypertext Markup Language (HTML) and JavaScript^{®}. However, any desired markup languages, script languages, or any other formats may be used without deviating from the scope of the invention. The user interacts with web pages from web application 542 via browser 520 in this embodiment in order to perform various actions to control conductor 540. For instance, the user may create robot groups, assign packages to the robots, analyze logs per robot and/or per process, start and stop robots, etc.

In addition to web application 542, conductor 540 also includes service layer that exposes OData REST API endpoints 544. However, other endpoints may be included without deviating from the scope of the invention. The REST API is consumed by both web application 542 and agent 514. Agent 514 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 540. Queueing REST endpoints may be responsible for queues and queue item management, such as adding data to a queue, obtaining a transaction from the queue, setting the status of a transaction, etc.

Monitoring REST endpoints may monitor web application 542 and agent 514. Notification and monitoring API 546 may be REST endpoints that are used for registering agent 514, delivering configuration settings to agent 514, and for sending/receiving notifications from the server and agent 514. Notification and monitoring API 546 may also use WebSocket communication in some embodiments.

The APIs in the service layer may be accessed through configuration of an appropriate API access path in some embodiments, e.g., based on whether conductor 540 and an overall hyper-automation system have an on-premises deployment type or a cloud-based deployment type. APIs for conductor 540 may provide custom methods for querying stats about various entities registered in conductor 540. Each logical resource may be an OData entity in some embodiments. In such an entity, components such as the robot, process, queue, etc., may have properties, relationships, and operations. APIs of conductor 540 may be consumed by web application 542 and/or agents 514 in two ways in some embodiments: (1) by getting the API access information from conductor 540; or (2) by registering an external application to use the OAuth flow.

The persistence layer includes a trio of servers in this embodiment - database server 550 (e.g., a SQL server), Al/ML server 560 (e.g., a server providing Al/ML model serving services, such as Al center functionality) and indexer server 570. Database server 550 in this embodiment stores the configurations of the robots, robot groups, associated processes, users, roles, schedules, etc. This information is managed through web application 542 in some embodiments. Database server 550 may manage queues and queue items. In some embodiments, database server 550 may store messages logged by the robots (in addition to or in lieu of indexer server 570). Database server 550 may also store process mining, task mining, and/or task capture-related data, received from listener 530 installed on the client side, for example. While no arrow is shown between listener 530 and database 550, it should be understood that listener 530 is able to communicate with database 550, and vice versa in some embodiments. This data may be stored in the form of PDDs, images, XAML files, etc. Listener 530 may be configured to intercept user actions, processes, tasks, and performance metrics on the respective computing system on which listener 530 resides. For example, listener 530 may record user actions (e.g., clicks, typed characters, locations, applications, active elements, times, etc.) on its respective computing system and then convert these into a suitable format to be provided to and stored in database server 550.

AI/ML server 560 facilitates incorporation of Al/ML models into automations. Pre-built AI/ML models, model templates, and various deployment options may make such functionality accessible even to those who are not data scientists. Deployed automations (e.g., RPA robots) may call AI/ML models from AI/ML server 560. Performance of the AI/ML models may be monitored, and be trained and improved using human-validated data. Al/ML server 560 may schedule and execute training jobs to train new versions of the AI/ML models.

Al/ML server 560 may store data pertaining to AI/ML models and ML packages for configuring various ML skills for a user at development time. An ML skill, as used herein, is a pre-built and trained ML model for a process, which may be used by an automation, for example. AI/ML server 560 may also store data pertaining to document understanding technologies and frameworks, algorithms and software packages for various AI/ML capabilities including, but not limited to, intent analysis, NLP, speech analysis, different types of Al/ML models, etc.

Indexer server 570, which is optional in some embodiments, stores and indexes the information logged by the robots. In certain embodiments, indexer server 570 may be disabled through configuration settings. In some embodiments, indexer server 570 uses ElasticSearch^{®}, which is an open source project full-text search engine. Messages logged by robots (e.g., using activities like log message or write line) may be sent through the logging REST endpoint(s) to indexer server 570, where they are indexed for future utilization.

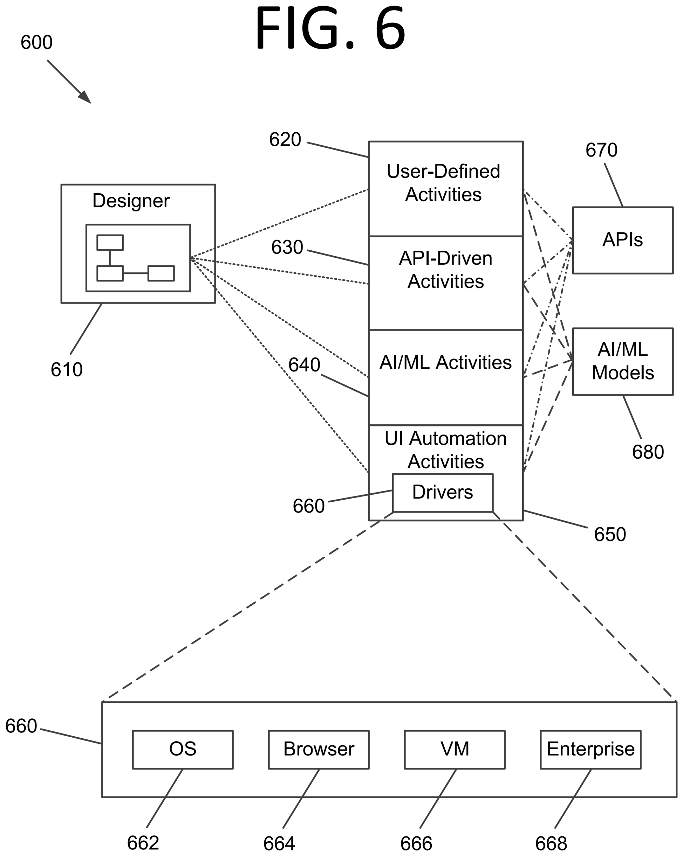

FIG. 6 is an architectural diagram illustrating the relationship 600 between a designer 610, activities 620, 630, 640, 650, drivers 660, APIs 670, and Al/ML models 680, according to an embodiment of the present invention. Per the above, a developer uses designer 610 to develop workflows that are executed by robots. The various types of activities may be displayed to the developer in some embodiments. Designer 610 may be local to the user's computing system or remote thereto (e.g., accessed via VM or a local web browser interacting with a remote web server). Workflows may include user-defined activities 620, API-driven activities 630, Al/ML activities 640, and/or UI automation activities 650. User-defined activities 620 and API-driven activities 640 interact with applications via their APIs. User-defined activities 620 and/or Al/ML activities 640 may call one or more Al/ML models 680 in some embodiments, which may be located locally to the computing system on which the robot is operating and/or remotely thereto.

Some embodiments are able to identify non-textual visual components in an image, which is called CV herein. However, it should be noted that in some embodiments, CV incorporates OCR. CV may be performed at least in part by AI/ML model(s) 680. Some CV activities pertaining to such components may include, but are not limited to, extracting of text from segmented label data using OCR, fuzzy text matching, cropping of segmented label data using ML, comparison of extracted text in label data with ground truth data, etc. In some embodiments, there may be hundreds or even thousands of activities that may be implemented in user-defined activities 620. However, any number and/or type of activities may be used without deviating from the scope of the invention.

UI automation activities 650 are a subset of special, lower-level activities that are written in lower-level code and facilitate interactions with the screen. UI automation activities 650 facilitate these interactions via drivers 660 that allow the robot to interact with the desired software. For instance, drivers 660 may include operating system (OS) drivers 662, browser drivers 664, VM drivers 666, enterprise application drivers 668, etc. One or more of Al/ML models 680 may be used by UI automation activities 650 in order to perform interactions with the computing system in some embodiments. In certain embodiments, Al/ML models 680 may augment drivers 660 or replace them completely. Indeed, in certain embodiments, drivers 660 are not included.

Drivers 660 may interact with the OS at a low level looking for hooks, monitoring for keys, etc. via OS drivers 662. Drivers 660 may facilitate integration with Chrome^{®}, IE^{®}, Citrix^{®}, SAP^{®}, etc. For instance, the "click" activity performs the same role in these different applications via drivers 660.

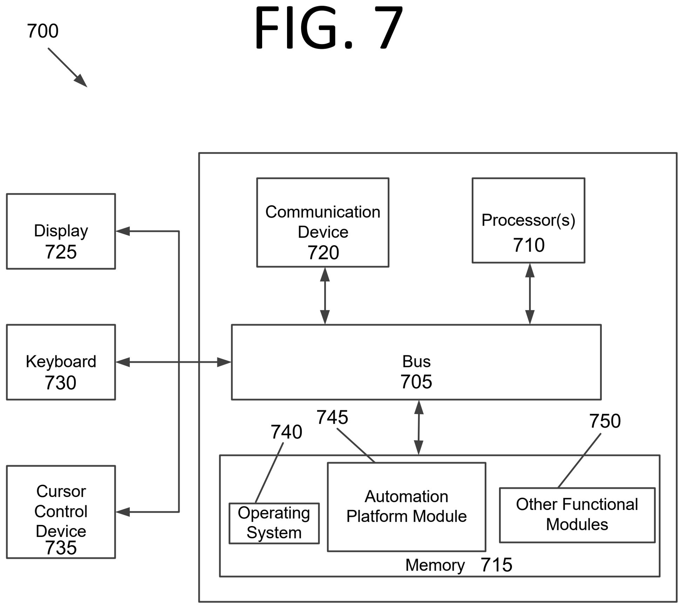

FIG. 7 is an architectural diagram illustrating a computing system 700 configured to provide all or part of an end-to-end automation platform, according to an embodiment of the present invention. In some embodiments, computing system 700 may be one or more of the computing systems depicted and/or described herein. In certain embodiments, computing system 700 may be part of system 200 of FIG. 2 or hyper-automation system 300, 400 of FIGS. 3 and 4. Computing system 700 includes a bus 705 or other communication mechanism for communicating information, and processor(s) 710 coupled to bus 705 for processing information. Processor(s) 710 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 710 may also have multiple processing cores, and at least some of the cores may be configured to perform specific functions. Multi-parallel processing may be used in some embodiments. In certain embodiments, at least one of processor(s) 710 may be a neuromorphic circuit that includes processing elements that mimic biological neurons. **In** some embodiments, neuromorphic circuits may not require the typical components of a Von Neumann computing architecture.

Computing system 700 further includes a memory 715 for storing information and instructions to be executed by processor(s) 710. Memory 715 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 710 and may include volatile media, non-volatile media, or both. The media may also be removable, nonremovable, or both. Computing system 700 includes a communication device 720, such as a transceiver, to provide access to a communications network via a wireless and/or wired connection. In some embodiments, communication device 720 may include one or more antennas that are singular, arrayed, phased, switched, beamforming, beamsteering, a combination thereof, and or any other antenna configuration without deviating from the scope of the invention.

Processor(s) 710 are further coupled via bus 705 to a display 725. Any suitable display device and haptic I/O may be used without deviating from the scope of the invention. A keyboard 730 and a cursor control device 735, such as a computer mouse, a touchpad, etc., are further coupled to bus 705 to enable a user to interface with computing system 700. However, in certain embodiments, a physical keyboard and mouse may not be present, and the user may interact with the device solely through display 725 and/or a touchpad (not shown). Any type and combination of input devices may be used as a matter of design choice. **In** certain embodiments, no physical input device and/or display is present. For instance, the user may interact with computing system 700 remotely via another computing system in communication therewith, or computing system 700 may operate autonomously.

Memory 715 stores software modules that provide functionality when executed by processor(s) 710. The modules include an operating system 740 for computing system 700. The modules further include an automation platform module 745 that is configured to perform all or part of the AI/ML processes described herein or derivatives thereof. Computing system 700 may include one or more additional functional modules 750 that include additional functionality.

One skilled in the art will appreciate that a "computing system" could be embodied as a server, an embedded computing system, a personal computer, a console, a personal digital assistant (PDA), a cell phone, a tablet computing device, a smart watch, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a LAN, a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

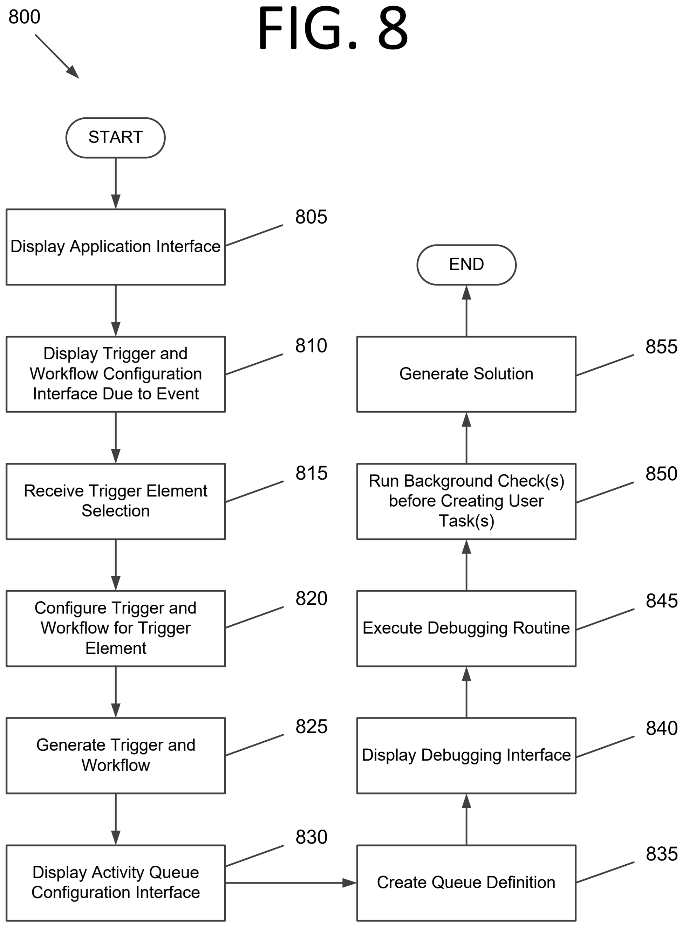

FIG. 8 is a flowchart illustrating a process 800 for creating a unified project using a unified build platform, according to an embodiment of the present invention. An application interface for an application front end and a unified build explorer menu are displayed at 805. The application interface includes graphical elements and the unified build explorer interface includes one or more projects. Responsive to an event, a trigger and workflow configuration interface are displayed at 810. The trigger and workflow configuration interface facilitate selection of a trigger element and a workflow for the selected graphical element. The event may be a user selecting or otherwise actively or passively interacting with a graphical element or other sources (e.g., application or operating system-initiated sources) in some embodiments.

A selection of a trigger graphical element is received at 815, and a trigger and a workflow are configured at 820, and the trigger and workflow are generated for the selected graphical element at 825 based on input from the user that is provided to the trigger and workflow configuration interface. In some embodiments, an end-to-end business process is triggered based on the generated trigger and workflow. An activity queue configuration interface is displayed at 830 that allows users to add and configure queue options. Responsive to the user adding and configuring an activity queue, a queue definition is created at 835. The queue definition is configured to be executed at runtime by a conductor application to provide just-in-time resource creation.

A debugging interface is displayed at 840 to test the application and new expressions. A debugging routine is executed in the debugging interface at 845 that alerts the user when an expression changes via integrations. The user is able to build and test both applications and integrations in the same environment. In some embodiments, the debugging interface facilitates debugging between a plurality of projects in a single unified user experience or solution. One or more background checks are run during the debugging routine at 850 before creating one or more user tasks.

The application front end and an automation including the generated trigger and workflow are generated as part of a solution at 855. The solution can include, but is not limited to, a workflow or process, a combination of workflows or processes, an application, an asset, a queue, a storage bucket, a data service entity, an ML skill, etc. Responsive to an event associated with the selected graphical element occurring in the application front end at runtime, the application front end is configured, via an event handler, to cause an attended or unattended RPA robot to execute the respective workflow for the selected graphical element at runtime. In some embodiments, when the RPA robot is an attended RPA robot, the attended RPA robot runs locally or on VM or serverless cloud infrastructure.

In some embodiments, functionality is provided to build at least two of applications, data services, integrations, workflows, custom connectors, document understanding models for classification and extraction, and tasks in a single unified project. In certain embodiments, at least two of processes, queues, entities, custom connectors, libraries, document understanding models, storage tables, assets, and credentials are created via the application interface and the unified build explorer menu. In some embodiments, a single canvas is provided that enables a plurality of users with different roles to collaborate on creation, troubleshooting, and monitoring of end-to-end business applications. In certain embodiments, users are allowed to create and modify workflow code for the plurality of graphical elements, as well as events that invoke the workflow code for the plurality of graphical elements.

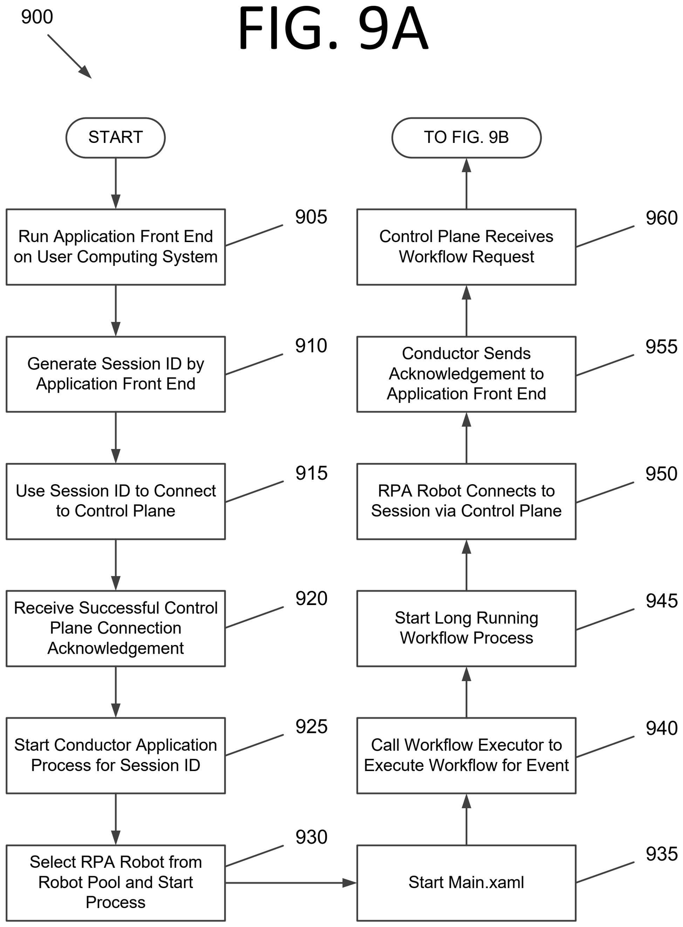

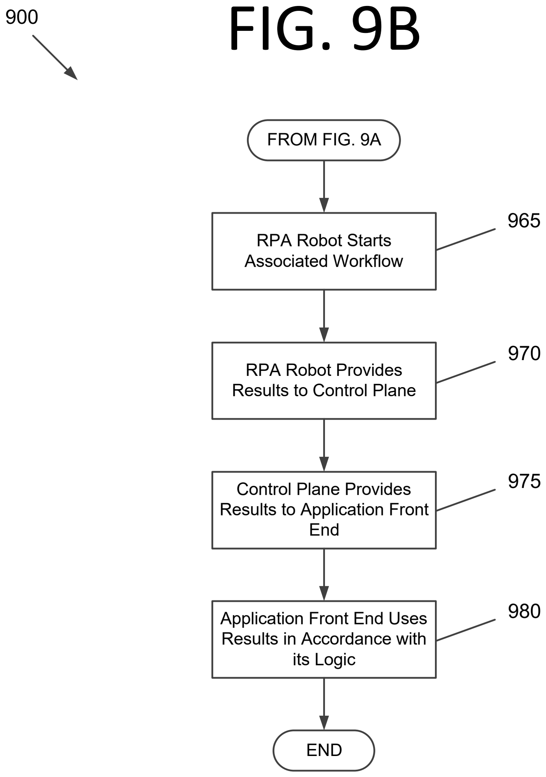

FIGS. 9A and 9B are flowcharts illustrating a process 900 for executing a unified project, according to an embodiment of the present invention. A user computing system runs an application front end at 905. A session ID is generated by the application front end at 910. The front end application then uses the session ID to connect to a control plane on page load using the session ID at 915. The user may be blocked from interacting with the application front end via a loader screen in some embodiments, disabling controls, etc. until acknowledgement of a successful connection is received by the application front end from the control plane at 920.

A process is also started by a conductor application for the session ID at 925. The conductor application selects an RPA robot from a robot pool and starts the process at 930 in attended or unattended mode. The RPA robot then starts its Main.xaml at 935, which runs local triggers and waits for events from the application front end (e.g., button clicks, menu selections, selecting a text field, etc.).

A workflow executor is called at 940 to execute the workflow for the event. Each request may have a Request ID that can be used to map the request and response from the workflow. To handle long running processes, a process is started by the RPA robot at 945. The RPA robot connects to the session with the session ID at 950 via the control plane and the conductor application sends a synchronous acknowledgement to the application front end at 955 with the job ID and status. Application front end 212 can now receive and process user interactions. A workflow request with the Extensible Application Markup Language (XAML) ID, input arguments, and request ID is received by the control plane from the application front end at 960. The RPA robot then starts the associated workflow at 965. Workflows that can be run by the RPA robot responsive to events each have a trigger and a series of actions. Once the workflow for a given action runs, the result is provided by the RPA robot to the control plane at 970 and then to the application front end by the control plane at 975. The application front end then uses the results in accordance with its logic for the event at 980.

In various embodiments of the present invention, the computer program(s) can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. **In** order to determine the metes and bounds of the invention, therefore, reference should be made to the appended claims.

## Claims

1. One or more non-transitory computer-readable media storing one or more computer programs, the one or more computer programs configured to cause at least one processor to:
display an application interface for an application front end and a unified build explorer menu, the application interface comprising a plurality of graphical elements and the unified build explorer interface comprising one or more projects;
responsive to an event, display a trigger and workflow configuration interface, the trigger and workflow configuration interface facilitating selection of a trigger and a workflow for a graphical element of the plurality of graphical elements;
generate a trigger and a workflow for the graphical element based on input from the user provided to the trigger and workflow configuration interface; and
generate the application front end and an automation comprising the generated trigger and workflow as part of a solution, wherein
responsive to an event associated with the graphical element occurring in the application front end at runtime, the application front end is configured, via an event handler, to cause an attended or unattended robotic process automation (RPA) robot to execute the respective workflow for the graphical element at runtime.

2. The one or more non-transitory computer-readable media of claim 1, wherein the event comprises a user selecting or otherwise actively or passively interacting with the graphical element of the plurality of graphical elements.

3. The one or more non-transitory computer-readable media of claim 1, wherein the solution comprises at least one of a workflow or process, a combination of workflows or processes, an application, an asset, a queue, a storage bucket, a data service entity, and a machine learning (ML) skill.

4. The one or more non-transitory computer-readable media of claim 1, wherein
the RPA robot is an attended RPA robot,
the attended RPA robot runs locally or on virtual machine (VM) or serverless cloud infrastructure.

5. The one or more non-transitory computer-readable media of claim 1, further comprising:
triggering an end-to-end business process based on the generated trigger and workflow.

6. The one or more non-transitory computer-readable media of claim 1, wherein the one or more computer programs provide functionality to build at least two of applications, data services, integrations, workflows, custom connectors, document understanding models for classification and extraction, and tasks in a single unified project.

7. The one or more non-transitory computer-readable media of claim 1, wherein the one or more computer programs are configured to create at least two of processes, queues, entities, custom connectors, libraries, document understanding models, storage tables, assets, and credentials via the application interface and the unified build explorer menu.

8. The one or more non-transitory computer-readable media of claim 1, wherein the one or more computer programs are further configured to cause the at least one processor to:
display an activity queue configuration interface that allows users to add and configure queue options; and
responsive to the user adding and configuring an activity queue, create a queue definition, the queue definition configured to be executed at runtime by a conductor application to provide just-in-time resource creation.

9. The one or more non-transitory computer-readable media of claim 1, wherein the one or more computer programs provide a single canvas that enables a plurality of users with different roles to collaborate on creation, troubleshooting, and monitoring of end-to-end business applications.

10. The one or more non-transitory computer-readable media of claim 1, wherein the one or more computer programs are configured to allow users to create and modify workflow code for the plurality of graphical elements, as well as events that invoke the workflow code for the plurality of graphical elements.

11. The one or more non-transitory computer-readable media of claim 1, wherein the one or more computer programs are further configured to cause the at least one processor to:
display a debugging interface to test the application and new expressions; and
execute a debugging routine in the debugging interface that alerts the user when an expression changes via integrations, wherein
the one or more computer programs allow the user to build and test both applications and integrations in a same environment.

12. The one or more non-transitory computer-readable media of claim 11, wherein the debugging interface facilitates debugging between a plurality of projects in a single unified user experience or solution.

13. The one or more non-transitory computer-readable media of claim 11, wherein the one or more computer programs are further configured to cause the at least one processor to:
run one or more background checks during the debugging routine before creating one or more user tasks.

14. A computer-implemented method, comprising:
displaying, by a computing system, an application interface for an application front end and a unified build explorer menu, the application interface comprising a plurality of graphical elements and the unified build explorer interface comprising one or more projects;
responsive to an event, displaying, by the computing system, a trigger and workflow configuration interface, the trigger and workflow configuration interface facilitating selection of a trigger and a workflow for a graphical element of the plurality of graphical elements;
generating, by the computing system, a trigger and a workflow for the graphical element based on input from the user provided to the trigger and workflow configuration interface;
generating, by the computing system, the application front end and an automation comprising the generated trigger and workflow as part of a solution; and
triggering, by the computing system, an end-to-end business process based on the generated trigger and workflow, wherein
responsive to an event associated with the graphical element occurring in the application front end at runtime, the application front end is configured, via an event handler, to cause an attended or unattended robotic process automation (RPA) robot to execute the respective workflow for the graphical element at runtime.

15. The computer-implemented method of claim 14, wherein the application interface provides functionality to build at least two of applications, data services, integrations, workflows, custom connectors, document understanding models for classification and extraction, and tasks in a single unified project.
